Europäisches Patentamt

European Patent Office

Office européen des brevets

(19)

(11) Publication number : **0 515 034 A1**

(12) **EUROPEAN PATENT APPLICATION**

(21) Application number : **92303503.4**

(22) Date of filing : **21.04.92**

(51) Int. Cl.⁵ : **B01D 63/04,** B01D 61/38,
// B01D53/22

(30) Priority : **22.04.91 US 688179**

(43) Date of publication of application :
**25.11.92 Bulletin 92/48**

(84) Designated Contracting States :
**AT BE CH DE DK ES FR GB GR IT LI LU NL SE**

(71) Applicant : **HOECHST CELANESE
CORPORATION
Route 202-206 North
Somerville, N.J. 08876 (US)**

(72) Inventor : **Reed, Bradley W.
508 Shadow View Drive
Gastonia, North Carolina 28054 (US)**

(74) Representative : **De Minvielle-Devaux, Ian
Benedict Peter et al
CARPMAELS & RANSFORD 43, Bloomsbury
Square
London WC1A 2RA (GB)**

(54) **Liquid membrane modules with minimal effective membrane thickness and methods of making the same.**

(57) Modules for use in fluid separations, especially contained liquid membrane separations, exhibit minimal effective membrane thickness. The modules [10] have a module case [C] and first and second sets of superposed fabric layers [12,14] within the case. Each fabric layer [12,14] contains warp-wise extending hollow fiber membranes [$F_f$, $F_s$]. In such a manner, the hollow fiber membranes [$F_f$] of the first set of fabric layers [12] alternate with the hollow fiber membranes [$F_s$] in the second set of fabric layers [14] so as to minimize the effective membrane thickness value of the module which thereby enhances the efficacy of fluid separations.

FIG.2

EP 0 515 034 A1

## RELATED APPLICATIONS

This application is related to commonly owned and copending EP Patent application No.

Reference PO9134EP (DJ 2008) and EP Patent application No. Reference PO9132EP (DJ 2009) filed on even date herewith and entitled the same as this application, the entire contents of each application being expressly incorporated hereinto by reference.

## BACKGROUND AND SUMMARY OF THE INVENTION

It has recently been suggested that microporous hollow fibers (MHF) may be employed in a liquid membrane separation technique whereby feed and sweep fluids (e.g., liquids and/or gases) flow through the lumens of two different sets of hydrophobic MHF (designated feed-fibers and sweep-fibers, respectively), while a liquid on the shell side of the MHF serves as the membrane. See generally, Majumdar et al, "A new Liquid Membrane Technique for Gas Separation", AIChE Journal, vol. 34, no. 7, pages 1135-1145 (1988), and Sengupta et al, "Separation of solutes from Aqueous solutions by Contained Liquid Membranes", AIChE Journal, vol. 34, no. 10, pages 1698-1708 (1988), the entire content of each being expressly incorporated hereinto by reference.

This so-called "contained liquid membrane" (CLM) technique is reported to have several advantages over conventional immobilized liquid membrane (ILM) separation technology. For example, conventional ILM technology typically requires periodic replacement of the immobilized membrane liquid due to solute saturation, depletion and/or contamination (depending upon the type of separation being conducted). As a result, conventional ILM technology is typically only limited to batch separation processing. However, since the membrane liquid according to the recently proposed CLM technique is physically present in the shell-side of a separation module, it may be replenished and/or replaced more or less continually thereby allowing separation processing to be accomplished on an essentially continuous basis.

Modules for performing CLM separation processes typically include a bundle of microporous hollow fibers divided approximately equally into a set of feed-fibers (through which the feed fluid flows), and a set of strip-fibers (through which the strip fluid flows). The MHF bundle is physically housed within a module case of desired size and configuration such that the lumens of the feed- and strip-fibers are in fluid-communication with supply and discharge ports of the module case associated with the flow of feed and strip fluids, respectively. In this manner, a cocurrent or countercurrent fluid flow through the respective sets of feed- and strip-fibers within the module case may be established.

Theoretically, when performing CLM separations, each of the feed-fibers should be in an immediately adjacent non-contacting relationship to a respective one of the strip-fibers so that the distance therebetween is filled with the membrane liquid. According to this ideal configuration, therefore, the theoretical minimum effective membrane thickness (EMT) is established whereby the closest packing of the feed and strip fibers is achieved so that the distance therebetween is minimized. However, conventional module manufacturing techniques fall far short of the theoretical minimum EMT since individual feed-fibers cannot exactly and reliably be interposed with individual strip-fibers. As a result, groupings of feed-fibers will reside in the module adjacent to groupings of strip-fibers thereby significantly increasing the module EMT over the theoretical minimum value.

It is towards providing solutions to the above problems that the present invention is directed. Broadly, therefore, the present invention is directed to modules containing hollow fiber membranes adapted to being used for contained liquid membrane separations which exhibit effective membrane thicknesses which are closer to the theoretical value than can be obtained using conventional membrane manufacturing techniques.

More specifically, the present invention is directed to modules having superposed fabric layers in which hollow fiber membranes are disposed in the fabric's wary-wise direction. These warp-wise hollow fiber membranes in alternating fabric layers can therefore be dedicated to feed or strip gas flows so as to ensure that feed- and strip-fibers are alternately disposed within the module and are adjacent to strip- and feed-fibers, respectively. As a result, reduced EMT values as compared to conventional CLM modules may be obtained.

Preferably, the fabrics employed in the present invention are woven fabrics in which the warp-wise hollow fiber membranes are interwoven with weft-wise monofilamentary fibers. However, other fabric forms may also be utilized according to the present invention -- for example, a knitted structure in which the hollow fiber membranes are inserted as a filling.

The weft-wise fibers serve to provide structural support for the warp-wise hollow fiber membranes so as to maintain fiber-to-fiber parallelism between the hollow fiber membranes in the lengthwise direction of the module. In addition, the weft-wise fibers serve as "spacers" which as impart self-centering functions to the hollow fiber membranes in the superposed fabric layers. These functional characteristics of the weft-wise fibers further minimize the EMT value of the module (i.e., the module EMT approaches the theoretical minimum EMT value).

Further aspects and advantages of this invention will become more clear after careful consideration is given to the detailed description of he preferred exemplary embodiments thereof which follows.

## BRIEF DESCRIPTION OF THE ACCOMPANYING DRAWINGS

Reference will hereinafter be made to the accompanying drawings wherein like reference numerals throughout the various FIGURES denote like structural elements, and wherein;

FIGURE 1 is a side perspective view of a module according to the present invention which is partly sectioned to expose the superposed fabric layers contained within the module case;

FIGURE 2 is a partial cross-sectional view of the module shown in FIGURE 1 as taken along line 2-2 therein but in a greatly enlarged manner for clarity of presentation;

FIGURE 3 is a block diagram illustrating the basic manufacturing steps employed in making the modules of the present invention; and

FIGURE 4 is a diagrammatic perspective view showing the manner in which fabric layers containing microporous hollow feed- and strip-fibers are superposed on one another.

## DETAILED DESCRIPTION OF THE PREFERRED EXEMPLARY EMBODIMENTS

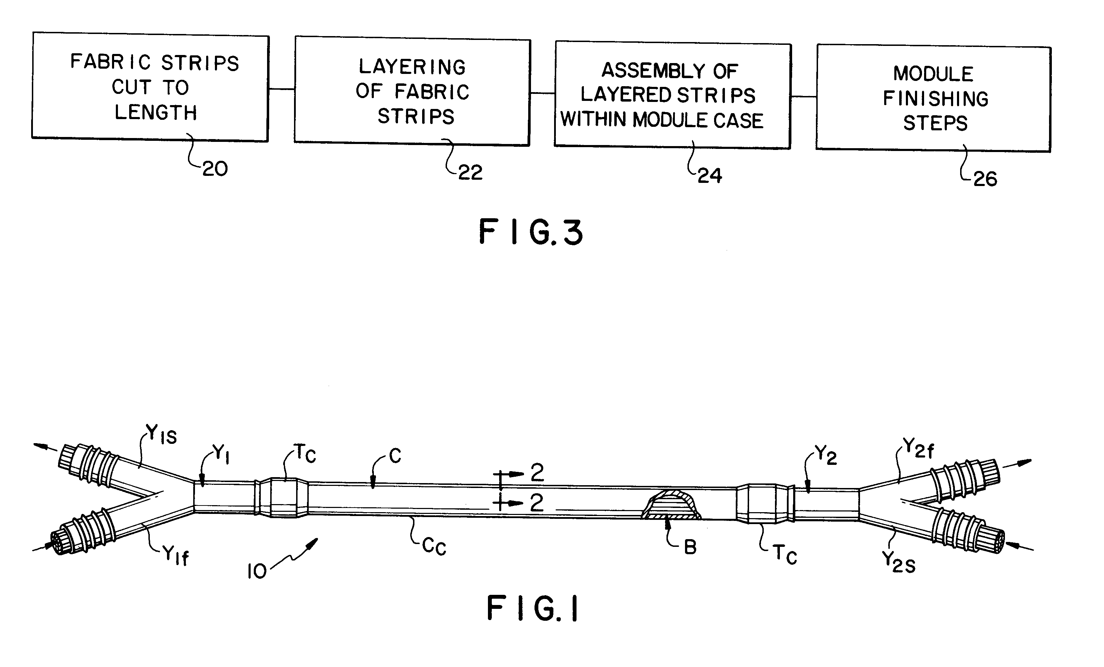

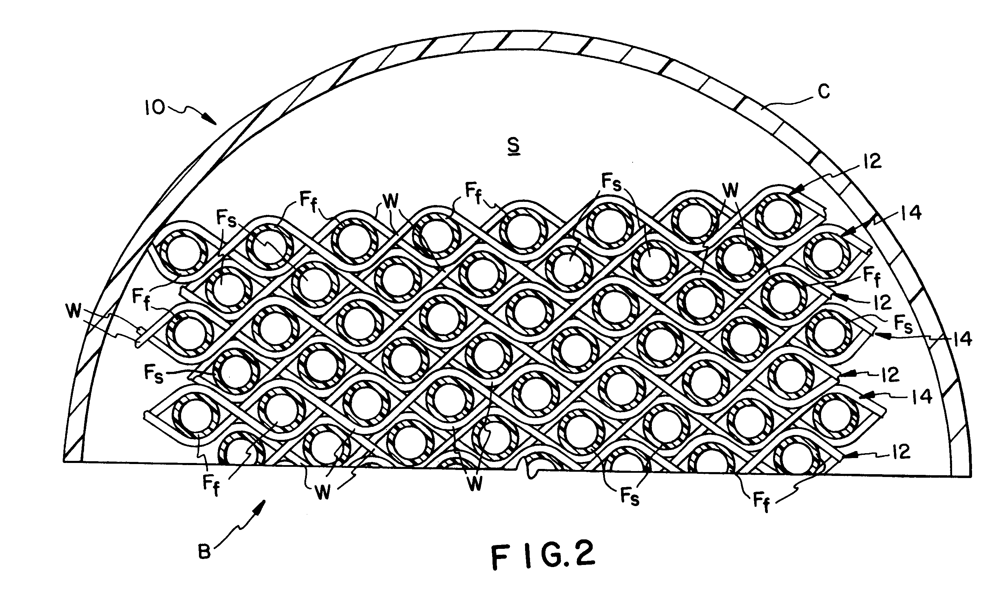

Accompanying FIGURE 1 depicts a preferred embodiment of a contained liquid membrane module 10 according to the present invention. In this connection, the module 10 includes a case C and a microporous hollow fiber bundle B disposed within the interior space S (see FIGURE 2) of the case. As is more clearly seen in the expanded scale of FIGURE 2, the bundle B within the case C is comprised of alternating superposed fabric layers 12 and 14 which include coextensive microporous hollow feed-fibers and strip-fibers (a few of each are identified in FIGURE 2 as $F_f$ and $F_s$, respectively). The lumens of the feed-fibers $F_f$ thus provide a path through which a feed fluid may flow, whereas the lumens of the strip-fibers $F_s$ provide a path through which the strip fluid may flow when the module 10 is placed into service during contained liquid membrane separations.

The module case C is most preferably comprised of a elongate central tube $C_c$ and a pair of Y-configured end tubes $Y_1$ and $Y_2$ are coupled to a respective end of the central tube $C_c$. The terminal ends of fabric layers 12 will thus be separated from the terminal ends of fabric layers 14 (preferably in a manner to be described below) and are disposed within a respective branch of each of the Y-configured tubes so as to allow the lumens of each of the microporous hollow feed- and strip-fibers $F_f$ and $F_s$, respectively, to be connected to a fluid source. That is, the terminal ends of the microporous hollow feed-fibers $F_f$ in fabric layers 12 may be disposed within branch $Y_{1f}$ of Y-configured tube $Y_1$ while the opposite terminal ends of the feed-fibers $F_f$ in fabric layers 12 may be disposed within branch $Y_{2f}$ of Y-configured tube $Y_2$. Similarly, the terminal ends of the strip-fibers $F_s$ in fabric layers 14 may be disposed within branches $Y_{1s}$ and $Y_{2s}$, respectively. In this manner, therefore, the branches, $Y_{1f}$, $Y_{2f}$, $Y_{1s}$ and $Y_{2s}$ serve as supply and discharge ports for the fluid during separation processes in dependence upon the desired relative flow through the module 10. For example, countercurrent fluid flow is depicted in FIGURE 1, but cocurrent fluid flow is similarly possible. Likewise, a number of modules 10 may be fluid-connected in series so as to perform the desired separation.

Each of the fabric layers 12, 14 is most preferably a woven fabric in which the feed- and strip-fibers $F_f$ and $F_s$, respectively, are disposed in the warpe-wise direction of the fabric layer. The weft-wise fibers W which are interwoven with the hollow fiber membranes constituting the feed-fibers $F_f$ and strip-fibers $F_s$, respectively, are preferably synthetic monofilamentary fibers, for example, monofilamentary fibers of nylon, polyester and the like. In this regard, it is especially preferred that the waft-wise fibers be formed essentially of the same synthetic resin as the feed- and strip-fibers $F_f$ and $F_s$.

The diameter of the monofilamentary weft-wise fibers W is preferably chosen so as to be significantly less than the diameter of the hollow fiber membranes which constitute the feed- and strip-fibers $F_f$ and $F_s$, respectively. In this regard, the strength characteristics of the weft fibers W provide a practical lower limit on their diameter given the synthetic resin from which they are formed. The weft fibers W should likewise not have too great a diameter as otherwise the separation performance of the module 10 may detrimentally be affected. As an exemplary guideline, the diameters of the weft fibers 10 are most preferably chosen so as to be greater than about 10 denier.

The weft-wise fibers W serve as spacers to essentially maintain a separation distance between the feed-fibers $F_f$ in fabric layers 12 and the adjacent strip-fibers $F_s$ in fabric layers 14. That is, adjacent ones of the feed- and strip-fibers $F_f$ and $F_s$, respectively, will be separated one from another at least by a dimension corresponding essentially to the denier of the weft-wise fibers W.

It will also be observed that the weft-wise fibers W serve self-centering functions. In other words, the weft-wise fibers W assist in orienting the adjacent individual feed-fibers $F_f$ and $F_s$ in the fabric layers 12 and 14, respectively, in staggered relationship to one another (i.e., since the "peaks" of the weft-wise fibers bounding one of the wary-wise hollow fiber membranes of one fabric layer will seat within respective weft-wise "valleys" between adjacent hollow fiber membranes within an adjacent fabric layer.)

Virtually any hollow fiber having walls which exhibit permeability with respect to the selected chemical species desired to be separated may be employed in the modules 10 according to the present invention. Thus, as used herein and in the accompanying claims, the term "hollow fiber membrane" and like terms are intended to refer to hollow fibers whose walls are permeable to a selected chemical species. Thus, hollow fibers which are physically permeable (e.g., due to the presence of pores in the hollow fiber walls) and/or hollow fibers that are chemically permeable (e.g., due to the mass transport of a chemical species through the hollow fiber walls) are included within the meaning of this definition.

Preferably, however, the hollow fiber membranes employed in the modules of this invention are microporous hollow fibers made by the "up-spinning" techniques disclosed in U.S. Patent Nos. 4,405,688 and 4,451,981, each in the name of James J. Lowery et al, and each being expressly incorporated hereinto by reference. Briefly, non-porous precursor hollow fibers are produced according to the techniques disclosed in these prior patents by malt spinning the precursor fibers in a substantially vertically upward direction (i.e., up-spinning). The thus melt spun hollow precursor fibers are then spin-oriented while subjecting them to a symmetrical quenching step using a hollow annular structure surrounding the precursor fiber which has one or more openings on its inner surface that distribute the quenching medium against the precursor fiber in a substantially uniform manner. The thus formed hollow precursor fiber may then be heat annealed by, for example, subjecting the non-porous precursor hollow fiber to a temperature of between about 5°C to 100°C for a time period of at least a few seconds (e.g., from a few seconds up to about 24 hours, preferably between about 30 minutes to about 2 hours).

The finished microporous hollow fibers will possess an average inner diameter in the range of from about 5 to about 1500 microns, and preferably in the range of from about 70 to about 1500 microns. The fibers are moreover characterized by a substantially uniform internal diameter (I.D.), for example, a coefficient of variation in inner diameter through a cross-section taken perpendicular to the axis of the fiber of less than about 8%, preferably less than about 5%, and more preferably less than about 3%.

The pores of the preferred microporous hollow fibers are essentially innterconnected through tortuous paths which may extend from one exterior surface or surface region to another, i.e., open-celled. Further, the pores of the preferred microporous hollow fibers of the present invention are microscopic, i.e., the details of the pore configuration or arrangement are described only in terms of microscopic dimensions. Thus, the open cells or pores in the fibers are smaller than those which can be measured using an ordinary light microscope, because the wavelength of visible light, which is about 5,000 Angstroms, is longer than the longest planar or surface dimension of the open cell or pore. The pore size of the microporous hollow fibers may be defined by using electron microscopy techniques which are capable of resolving details of pore structure below 5,000 Angstroms or by mercury porosimitry techniques.

The average effective pore size of the microporous hollow fibers useable in the practice of this invention is preferably between 50 to 2000 Angstroms, and more typically between 100 to 1000 Angstroms. By "average effective pore size" Is meant the smallest dimension of a pore which would allow a generally spherical particle of that same dimension to pass therethrough. The pores generally have an elongated shape with a width of from 50 to 2000 Angstroms, and a length of from 500 to 10,000 Angstroms. Hence, the "average effective pore size" of the preferred microporous hollow fibers will usually be determined by the width dimension of the pores. These pores will, moreover, be fairly uniform around the circumference of the fiber. For example, the preferred microporous hollow fibers will exhibit an average ratio of the maximum pore density to the minimum pore density around the circumference of the fiber of less than about 3:1, and usually less than about 2:1.

Microporous hollow fibers of the type described above are commercially available from Hoechst Celanese Corporation, Separations Products Division, Charlotte, north Carolina under the registered trademark CELGARD®.

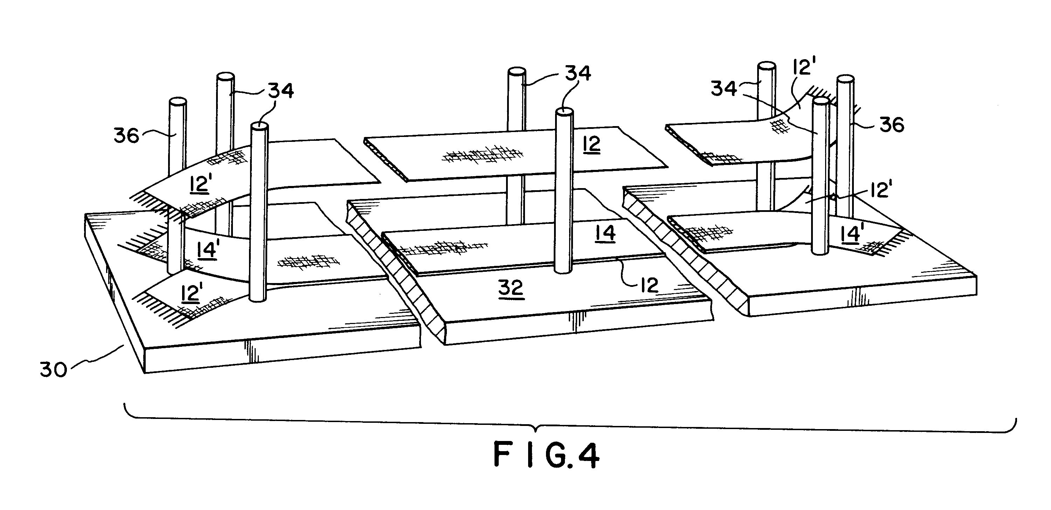

Accompanying FIGURE 3 shows in block fashion the principal fabrication steps employed to make the module 10 described above. As is seen, fabric strips of a width appropriate to the interior space S of the module case C being used are first cut to the desired length in step 20. The cut strips of fabric are then stacked in layers in step 22 by superposing one fabric strip upon another with the hollow fiber membranes in each of the fabric strips being oriented in the lengthwise dimension of the module. During this step, care is taken to ensure that end portions of each fabric strip are separated from end portions of adjacent strips (i.e., so as to segregate the set of hollow microporous feed-fibers from the set of microporous hollow strip-fibers in the superposed fabric layers).

The width of the individual cut strips is selected so as to essentially completely fill the interior of the module without significant gathering or buckling. Thus, the width of individual strips may be greater/lesser than other strips so that when assembled in stacked relationship, the cross-sectional geometry of the stack closely resembles the cross-sectional geometry of the module.

When the desired number of fabric strips have been superposed, the resulting bundle B is then inserted within the central tube $C_c$ of the module case C during step 24. During this step, the separated terminal ends of the fabric layers 12, 14 are positionally restrained (e.g., by means of tape) to maintain them in their separated relationship. Once the bundle B is positioned within the central tube $C_c$, the separated terminal ends of fabric layers 12, 14 are inserted into their respective branch of the Y-configured ends $Y_1$ and $Y_2$. The Y-configured ends $Y_1$ and $Y_2$ are then assembled to the central tube $C_c$ by means of the tube couplings TC.

The module 10 is then finished in step 26, for example, by potting the terminal ends of the hollow fiber membranes within their respective branch of the Y-configured connectors $Y_1$ and $Y_2$, and conducting any needed quality control inspections. The finished module 10 is then packaged and shipped to the customer.

A schematic perspective view of the jig assembly 30 which is used during the fabric strip layering step 22 is shown in accompanying FIGURE 4. the jig assembly includes a baseboard 32 and a number of laterally separated upright pairs of posts 34 aligned so as to define a channel for the fabric strips 12, 14. A pair of end center-posts 36 are provided at each end of the jig 30 in cooperation with the end-most pairs of posts 34. The center-posts 36 and their cooperatively disposed pair of posts 34 thereby collectively establish end channels for receiving the respective end portions 12′, 14′ of the fabric strips 12, 14, respectively. In this manner, the end portions 12′, 14′ of each fabric strip 12, 14, respectively, may be segregated one from the other. These segregated end portions 12′, 14′ may then be bundled together and inserted into their respective branch of the Y-configured tubes $Y_1$ and $Y_2$ as described previously.

It will be appreciated that the particular geometry of the module 10 described above is only illustrative in that it represents a particularly preferred embodiment of this invention. Those in this art will recognize that the reduce EMT that ensues by virtue of the fabrication techniques of the present invention may have applicability in other end-use applications in which hollow fiber membranes are employed.

Therefore, while the present invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

The dependencies of the subsidiary claims hereinafter do not imply any limitation as to the possible combinations of the features mentioned in those claims.

## Claims

1. In a module having a module case and sets of hollow feed-fiber and strip-fiber membranes, the improvement wherein said sets of hollow feed-fiber and strip-fiber membranes constitute respective alternating fabric layers within said module case.

2. An improved module as in claim 1, wherein said microporous hollow feed-fiber membranes and said strip-fiber membranes are disposed in the wary-wise direction of their respective fabric layers.

3. An improved module as in claim 1 or 2, wherein said feed-fiber membranes and said strip-fibers membranes in their respective fabric layers are interwoven with weft-wise fibers.

4. An improved module as in claim 3, wherein said weft-wise fibers are synthetic monofilamentary fibers.

5. An improved module as in claim 1, wherein said module case has respective supply and discharge ports for each of said feed-fiber and strip-fiber membranes, and wherein terminal end portions of said fabric layers are separated from one another and disposed within said respective supply and discharge ports associated with said feed-fiber membranes and said strip-fiber membranes.

6. An improved contained liquid membrane module comprising:
   an elongate module case having an interior space for containing a membrane liquid; and
   superposed alternating layers of feed-fluid and strip-fluid fabrics disposed within said interior space of said module case, wherein
   each of said feed-fluid and strip-fluid fabrics includes hollow fiber membranes coextensive with the length-wise direction of said module case and constituting feed-fibers through which a feed fluid may flow and strip-fibers through which a strip fluid may flow, respectively.

7. A hollow fiber module including a module case and a bundle of hollow fiber membranes within an interior space of the module case, wherein said bundle of hollow fiber membranes is comprised of superposed woven fabric layers in which said hollow fiber membranes constitute warp-wise fibers of each said fabric layer.

8. A hollow fiber module as in claim 7, wherein said hollow fiber membranes of each said superposed fabric layer are maintained in parallel to one another and to hollow fiber membranes of adjacent fabric layers by means of weft-wise fibers interwoven therewith.

9. A hollow fiber module as in claim 8, wherein said weft-wise fibers are synthetic monofilament fibers having a denier less than the diameter of said warp-wise hollow fiber membranes.

10. A method of making a module containing hollow fiber membranes comprising the steps of:

    superposing fabric layers each coextensively containing a number of parallel warp-wise hollow fiber membranes; and then

    positioning said superposed fabric layers within a module case such that the wary-wise hollow fiber membranes extend in the length-wise direction of the case.

11. A method as in claim 10 wherein said step of superposing said fabric layers includes the step of separating end portions of alternating fabric layers to obtain a first set of fabric layers containing hollow fiber membranes which alternate with a second set of fabric layers containing hollow fiber membranes.

12. A method as in claim 11, wherein said end portions are positionally restrained so as to maintain said separation thereof.

13. A method as in claim 11, wherein said step of superposing said fabric layers includes forming strips of fabric of preselected width and length, and then sequentially positioning said fabric strips within a jig sized and configured to allow aligment of the fabric strips and separation of said end portions.

FIG.3

FIG.1

FIG.2

EP 0 515 034 A1

FIG.4

European Patent Office

**EUROPEAN SEARCH REPORT**

Application Number

EP 92 30 3503
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 750 918 (SIRKAR)<br>* abstract; figures *<br>* column 9, line 7 – line 52 *<br>* column 11, line 40 – column 12, line 12 * | 1-3 | B01D63/04<br>B01D61/38<br>//B01D53/22 |
| Y | | 4-6,10 | |
| A | | 7,8,11,<br>12 | |
| Y | FR-A-2 236 537 (SOC DES USINES CHIMIQUES RHÂNE-POULENC)<br>* claims 1,12-15; figures 1-5,17 *<br>* page 2, line 21 – line 30 *<br>* page 5, line 32 – page 6, line 37 *<br>* page 12, line 13 – line 33 * | 6,10 | |
| X | | 7,8 | |
| A | | 9 | |
| X | EP-A-0 285 812 (AKZO)<br>* abstract; claim 1; figures 5,6,10 *<br>* column 4, line 23 – line 28 *<br>* column 8, line 43 – line 54 * | 1-4,7-11 | |
| A | | 5 | TECHNICAL FIELDS SEARCHED (Int. Cl.5 ) |
| Y | EP-A-0 345 983 (KURARAY CO LTD)<br>* abstract; claim 1; figures 1,2,3B *<br>* page 3, line 44 – page 4, line 22 *<br>* page 5, line 3 – line 8; example 1 * | 7-10 | B01D<br>A61M |
| Y | EP-A-0 089 122 (CORDIS DOW CORP)<br>* abstract; claim 7; figures 4-6 *<br>* page 2, line 29 – page 4, line 15 *<br>* page 10, line 25 – page 11, line 21 * | 4,7-10 | |
| A | | 2,3 | |

-/--

The present search report has been drawn up for all claims

| Place of search | Date of completion of the search | Examiner |
|---|---|---|
| THE HAGUE | 18 AUGUST 1992 | HOORNAERT P.G.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P0401)

EP 0 515 034 A1

| | European Patent Office | EUROPEAN SEARCH REPORT | Application Number |
|---|---|---|---|

EP 92 30 3503
Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,Y | AICHE JOURNAL<br>vol. 34, no. 10, October 1988,<br>pages 1698 - 1708;<br>A. SENGUPTA ET. AL.: 'Separation of Solutes from Aqueous Solutios by Contained Lquid Membranes'<br>* abstract; figures 1,2 *<br>* page 1699, column 1, line 24 - page 1700, column 1, line 21 *<br>* page 1701, column 2, last paragraph - page 1702, column 1, paragraph 1 * | 5 | |
| A | | 1,6,11 | |
| | --- | | |
| D,A | AICHE JOURNAL<br>vol. 34, no. 7, July 1988,<br>pages 1135 - 1145;<br>S. MAJUMDAR ET. AL.: 'A New Liquid Membrane Technique for Gas Separation'<br>* abstract; figures 1,2,5 *<br>* page 1136, column 1, line 7 - line 43 *<br>* page 1138, column 2, last paragraph * | 1,5,6 | |
| | --- | | TECHNICAL FIELDS SEARCHED (Int. Cl.5 ) |
| A | WORLD PATENTS INDEX LATEST<br>Section Ch, Week 9117,<br>Derwent Publications Ltd., London, GB;<br>Class D, AN 91-123703<br>& SU-A-1 473 160 (AS LATV INORG CHEM) 23 September 1990<br>* abstract * | 1,5,6 | |
| | --- | | |
| P,X | EP-A-0 442 147 (AKZO) 21 August 1991<br>* abstract; claims 1,10,11; figures 1,5,6 *<br>* column 4, line 39 - line 49 *<br>* column 13, line 1 - column 14, line 24 * | 1-10 | |
| | --- | | |
| A | US-A-3 536 611 (DE FILIPPI)<br>* abstract; claims 1,2,6; figures *<br>* column 2, line 26 - line 48 *<br>* column 3, line 37 - line 54 *<br>* column 4, line 29 - line 35 * | 7-9 | |

The present search report has been drawn up for all claims

| Place of search | Date of completion of the search | Examiner |
|---|---|---|
| THE HAGUE | 18 AUGUST 1992 | HOORNAERT P.G.R. |

EPO FORM 1503 03.82 (P0401)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

11